# EUROPEAN PATENT APPLICATION

(11) **EP 1 225 762 A2**
(43) Date of publication of application: **24.07.2002**
(21) Application number: 01310486.4
(22) Date of filing: 14.12.2001
(51) Int. Cl.: H04N 5/445

(54) **Dynamic adjustment of on screen graphic displays to cope with different video display and/or display screen formats**

(30) Priority: 09.01.2001 GB 0100563
(71) Applicant: Pace Micro Technology PLC, Saltaire, Shipley, BD18 3LF (GB)
(72) Inventor: Hodgkinson, Andrew, Cambridge CB4 1JA (GB)
(74) Representative: Wood, Graham

(57) **Abstract**

The invention which is the subject of this application is to provide for the dynamic adjustment of the display of a graphic display on a display screen, such as that of a television set. Typically, the display screen shows a video display such as that of a television programme generated from received video data such as via a broadcast data receiver, DVD, VCR or the like. On occasion and typically in response to a user selection a graphic display can be generated and overlaid on the video display to provide information to the user. Changes in the video display to take into account different video display formats and/or the particular format of the display screen can cause the graphic display to be unacceptable but this is avoided in the current invention which allows the graphic display to be altered with respect to the format such that it is visible and in a preferred form.

## Description

The invention to which this application relates is the generation of a video display on a display screen, such as the screen of a television set.

The introduction of widescreen television displays and the wide variety of display ratios which are possible with digital television systems, present unique challenges for the user interface design of a broadcast television receiver, for digital data.

Typically, television displays come in two basic types described by the aspect ratio (width:height) of the display screen tubes. Widescreen television display screens have a 16:9 picture shape, whereas traditional television display screens have a 4:3 picture shape.

If a broadcast digital television receiver (henceforth BDR) is connected to the television, there are fundamental differences in the way that the user of the broadcast data receiver might want the incoming video data dealt with in terms of display of the same, depending on the type of television they own. As a result, most (possibly all) digital television receivers, DVD video players and so on have an option in a setup menu where the user specifies the type of television display that the device is connected to. For the purposes of the rest of this description only broadcast data receivers will be considered, though the principles apply equally well to DVD video players and other devices.

In order to accept different display styles, the broadcast data receiver (BDR) may direct the television to go into a variety of different display modes. In current designs of BDR the design of the user interfaces is such so that they remain visible regardless of the way in which the television is presenting information, or alternatively decide to use the option to have parts of the interface becoming hidden in some cases. For example, the top and bottom of the video display may be deleted or cropped off if the receiver controls an attached widescreen television video display to go into 16:9 "zoom" mode.

While this is presently the only real practical solution it can be irritating to the user. A further problem is that once the decision as to the form of display is made, the display format then tends to be constant thereafter unless the user specifically alters the same, or the system is switched off completely and then restarted.

BDR's face various implementation challenges, because the incoming digital video data is not always in a format to generate a video display of the same shape as the television display. For example, sometimes the display will be a "traditional" 4:3 shape, sometimes it may be a letterboxed image with black bars at the top and bottom encoded as part of the actual display, again fitted overall into a 4:3 shape.

In both cases, the video data pixels forming the video image in the digital domain are roughly square. The display, however, could be an anamorphic widescreen display - in which case the pixels are wider than they are tall, so the picture can be a 16:9 shape rather than 4:3, yet contain no black bars. A widescreen television shows the full-height image stretched to fill the width of the screen, resulting in a wide image that has the correct proportions. Showing such video at full height on a 4:3 television, however, would leave the image too tall with respect to its intended width and as a result, in addition to specifying the type of television display attached to a broadcast data receiver, it is common for setup menus to ask how to resolve problems where the shape of the incoming video data display is not easily matched with the shape of the television's display tube.

In many cases, in addition to the video display generated on screen, a graphics display such as; the channel number, next programme to be shown, and any textual message, can be superimposed or overlaid on the video display on the display screen by the BDR following a user request for the particular graphic display type. A problem with this, and one which is addressed in this application, is the positioning and sizing of the graphics display of information, also known as text windows, which are superimposed over the video display on the television and particularly the shape and sizing of the graphics display when the video display format is changed. Conventionally, the changing of the format can lead to the graphics display being omitted, completely or partially, from display to the user.

The aim of the present invention is to provide a signalling mechanism that allows a user interface between a broadcast data receiver and display screen to dynamically configure itself to best fit the graphics display shape and size on the screen, thus solving the problems of the display being obliterated or partially hidden on the display screen.

In a first aspect of the invention there is provided television apparatus comprising a source of digital video data and a display screen connected to said source, said source processing said data to generate a video display in a particular format for display on the display screen which may be of the same or a different format, said source of video data also capable of generating a graphic display on a portion of said display screen and
characterised in that the shape, dimensions and/or position of the graphic display on the display screen is controlled by the data source with respect to the video display format and/or the display screen format.

Typically the data source is either of a broadcast data receiver (BDR) or a DVD player or a VCR player and the invention is now described with reference to the BDR.

Typically the BDR includes a signalling mechanism and the action taken by software in the BDR which controls the graphics display is in response to the signals received from the signalling mechanism.

Typically this invention relates to any device which displays a decoded video display on a PAL analogue television display and will at some point in its operation overlay additional information in the form of a graphics display, separate from, but usually related to, the decoded video display. In one embodiment the graphics display may be a channel number and name, information relating to a particular programme or programmes or generally any text display.

Typically the format of the display screen on which the decoded video display is generated is irrelevant, so long as it supports, through the BDR connected to the display screen, different aspect ratios and/or active areas such that the BDR may ask the display screen to change the way in which it presents the video dynamically. This is most relevant for, but not limited to, 16:9 or "widescreen" display screens of television sets.

In accordance with the present invention in one embodiment, the broadcast data receiver generates a 16:9 format video display image, full height, and is connected to a 4:3 format television display screen in which case the BDR stretches the video display to the correct proportions horizontally, and removes or "chops off" the left/right edges of the video display that no longer fit on the display screen. Alternatively the BDR can scale the video display down vertically, adding blank or black bars to the top and bottom of the video display. In this case the whole video display is shown on the display screen, albeit at a lower overall resolution. These options are often found in setup menus of BDR's and referred to as "full screen" or "letterbox" options respectively.

Typically, the data sent to the BDR is sent in a recognisable format such as (e.g. a Motion Picture Expert Group 2 (MPEG 2) transport stream). The data stream contains embedded codes telling the BDR the shape, or aspect ratio format of the video display content (e.g. 4:3 or 16:9) and what the active area of that content is (e.g. a widescreen 16:9 image that actually contains black bars to the left and right, with a 4:3 shaped image sitting in the middle - often called pillarboxing). The broadcast data receiver uses the information about the aspect ratio of the incoming video and its active area, and combines this with the information about the display screen it is attached to and any other related items as described above, and reaches a decision as to how the video display data should be decoded and the video display best shown on the display screen. This includes sending signals on line 23 of the decoded video display and/or through pin 8 of a SCART connector to the display screen to inform the display screen control means what format of video display it is being sent.

It is the last stage of the process, the signalling of the output format to the television display screen, which is important for this invention. No broadcast data receiver currently has a mechanism to deal with the impact of asking the display screen to change dynamically into a different display "mode", for the graphics display than that which the broadcast data receiver is generating on top of the video display.

In accordance with one practical implementation of the invention three software units or layers are required:
Control of the MPEG decoder hardware in the BDR ("MPEG controller")
Management of the resolution and position of the graphics display plane(s) overlaid on top of the video display. Preferably this includes a "safe area" description, a region in which no graphics display should be drawn so as to take into account overscan on television displays ("graphics plane controller").

Software responsible for laying out and redrawing overlay information the graphics display plane, for example, current channel name / number, "now and next", digital teletext, pages from the World Wide Web ("display manager").

It is assumed that any part of the system has access to overall configuration information, specifically the setting of the type of television connected to the broadcast data receiver.

The "MPEG controller" is responsible for sending signals to the second layer graphics generator of the BDR for the graphics plane controller dynamically i.e. when a change in the active area or aspect ratio of the video display is detected.

The detection of a change of format in the video display is already performed in various different ways in existing digital television receivers. The signal sent by the MPEG controller when a change occurs may contain information on what signalling the broadcast data receiver is using (if any) to instruct the television to change viewing format. For example, it may describe a change from 4:3 to 16:9 anamorphic format using SCART pin 8, or from 4:3 to 16:9 zoom format for letterboxed material, through line 23 of the video signal.

Alternatively, or additionally, the MPEG controller can support an interface through which the graphics plane controller may ask for this information whenever it needs it. Upon seeing the signal from the MPEG controller, the graphics plane controller for the graphics display reads the signalling state for the television, and in conjunction with the information describing the attached display screen, adjusts the parameters for pixel shape and safe area for the graphics display.

Typically, the source of digital video data is a BDR and any alteration to the graphic display on the display screen is made via any or any combination of control of the MPEG decoder hardware, management of the resolution of the graphics display plane overlaid on top of the video display and/or the laying out and redrawing of the graphics display.

In a further aspect of the invention there is provided a signalling mechanism for a broadcast data receiver, said mechanism allowing dynamic movement and rescaling of a graphics display generated from the broadcast data receiver on a display screen, said dynamic movement and rescaling of the graphic display generated to best fit said graphics display to the said display screen said dynamic movement and rescaling of the graphics display generated with reference to the video display generated from the received data and/or the format of the display screen connected to the said broadcast data receiver and movement and rescaling of the format of the graphic display occurring during viewing of the same to take into account changes in the format of the video display and/or display screen formats.

Specific embodiments of the invention are now described with reference to the accompanying drawings, wherein:-
Figures 1A-B illustrate conventional video display formats with an overlaid .graphic display;
Figures 2A-B illustrate the effect on the graphic display if the display format is changed in a conventional system;
Figures 3A-B illustrate the effect on the graphic display if the format is changed in accordance with the invention; and
Figure 4 illustrates one apparatus system with which the invention can be used.

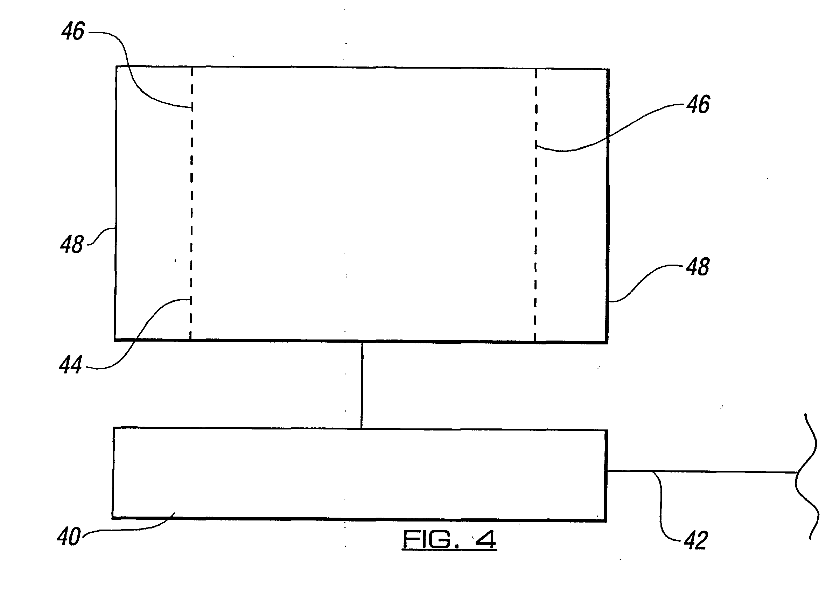

Referring firstly to Figure 4 there is illustrated an apparatus system in one embodiment with which the invention can be used. The system comprises a broadcast data receiver 40 which receives data via cable, satellite or terrestrial transmission systems broadcast from a remote location via connection 42. The BDR is capable of processing the received data, and generating amongst other things a video display on a display screen 44, typically of a television set, which is connected to the BDR 40. The format of the video display transmitted for display on the display screen can vary and have an effect dependent on the format of the display screen. For example the display screen can have a 4:3 format shape as illustrated by the broken lines 46 or a 16:9 format or widescreen format as illustrated by the full lines 48.

Conventionally, with a 4:3 video display format and a 4:3 format display screen, roughly square shaped video pixels for the graphics display and a standard amount of safe area border to take into account are used.

With a 4:3 video display format and a 16:9 format display screen, it may be possible to reduce the safe area to the left and right of the display. Whilst most 16:9 display screens simulate horizontal overscan when used to display 4:3 format video displays, the variation and overall amount is lower than for true 4:3 video displays.

For the true anamorphic 16:9 video display format and a 16:9 format display screen, the video pixels are of a shape which is wider than they are tall for the graphics display.

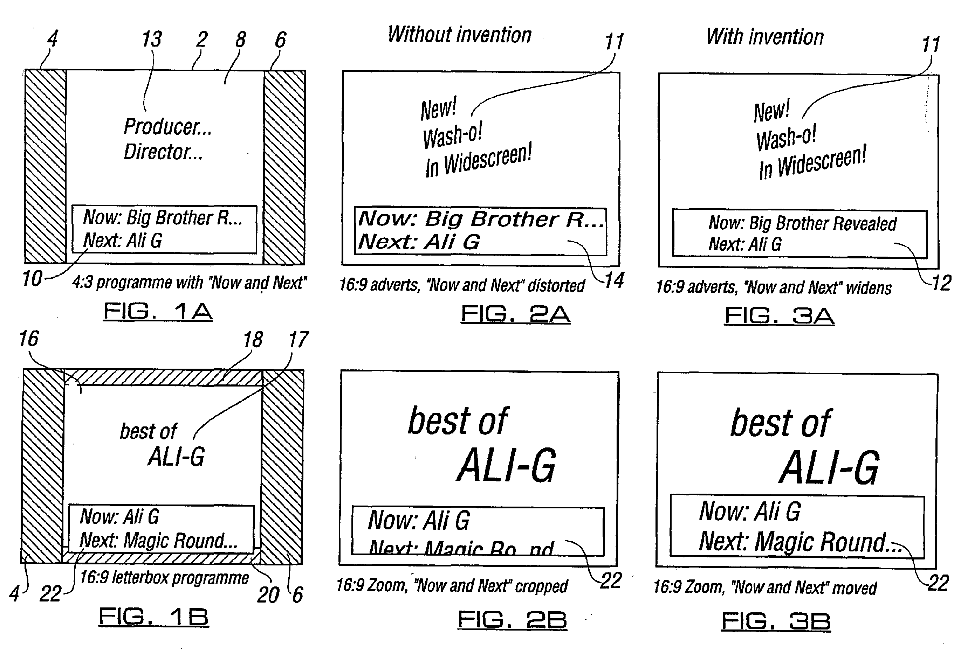

For the 16:9 zoom format (letterbox) video display and a 16:9 format display screen the video pixels for the graphics display are known to be roughly square, but relatively large, with a significant proportion of the visible area of the video display missing from the top and bottom. This means the safe area and/or pixel aspect ratio of the graphics display can have changed. The graphics plane controller thus sends a signal indicating the details of the change to the graphics display manager in the BDR. If the display manager ignores this, then the broadcast data receiver conventionally behaves in a manner in which elements of the graphic display may be off the visible region of the display screen or might appear stretched vertically or horizontally. An example of this problem is shown in Figure 2B which is explained in detail later.

In accordance with this invention, the graphics display can be modified as and when required and to take into account changes in the formats of the video display with respect to the display screen format. If the safe area has moved, the graphics display can be moved in or out to the edges of the display screen if the BDR controller knows that the graphic display is normally positioned in the corner of the display screen such as for example is the case with a channel number graphic display which typically is positioned in the top left of the display screen, or a display showing elapsed time of a movie can be kept in the bottom right corner of the display screen. Web pages can be reformatted to fit the new available display width, and so on. If the pixel aspect ratio has changed, the graphic display is rescaled. The way in which this is done is implementation defined.

For example, if the change is from a 4:3 format video display to a 16:9 format video display and the BDR is attached to a 16:9 format display screen television, then conventionally the on-screen graphics display designed for the 4:3 display would appear wider than it should be, when in the 16:9 format, as is illustrate in Figure 2A.

Possible solutions are to shrink the graphics display in size horizontally by about one third. However, this reduces the resolution which the display can use in the graphics plane. The height of the graphics display can be increased to match the width, which, since individual elements of the display are now larger, does reduce the screen area available to the graphics display, but also means that the graphic display has a greater resolution available than in 4:3 mode.

The scaling of vector rendered items such as fonts can be done dynamically, whilst scaling of bitmaps can be accomplished by switching between collections of bitmaps optimised for different aspect ratios. In practice, having just a 4:3 video display and a 16:9 video display and using a threshold aspect ratio for the switch may be sufficient, but more advanced systems can expand on this or even do the bitmap scaling dynamically, provided the scaling algorithms are good enough to produce an acceptable on-screen quality. This completes the set of actions needed to keep a graphics display visible and in correct proportion, regardless of the aspect ratio being signalled to an attached display screen, as a result of changes in the video display "beneath" the graphics display plane.

Since the broadcast data receiver does not know if the user has manually set a presentation mode for their display screen, it has to assume that the switching signals it sends to the television are acted upon in the correct manner. Exactly what those assumptions are is a matter of specification for the particular device, with the BDR graphics plane controller software being responsible for mapping the switching types made and passing to the MPEG controller, details of the changes made to the safe area and aspect ratio.

The processor speed and complexity of graphics overlays in the broadcast data receiver influences the length of time it takes to move and redraw items in the graphics display plane. As a result there will usually be a brief moment during the switching from one mode to another when items appear in the wrong place, or are the wrong shape, before both the television and broadcast data receiver settle down into the new state. This transitional state is usually very brief and can be improved in part by completely hiding the graphics display just before switching until any redraws that the display manager wishes to do are complete.

In a practical example a 4:3 video display for a particular program is being watched by a user via a BDR on a display screen as illustrated in Figure 1A. The BDR is connected to the 16:9 format "widescreen" television display screen 2 and is correctly configured, so that during the program, the 16:9 display screen shows the 4:3 format video display 8 in 4:3 mode, with black bars 4, 6 to the left and right. The program content ends and the credits roll. During the credits display 13, the user selects to activate a "now and next" graphic display function which generates via the BDR, a graphics display 10 on the display screen. Whilst the "now and next" display is still visible, the program ends completely and an advertisement 11 is displayed. The advertisement is in a 16:9 video display format, so the MPEG controller in the BDR uses line 23 and SCART pin 8 in the connection to the display screen to signal that the display screen should switch into 16:9 format, which it does, as illustrated in both Figures 2A and 3A. However, in accordance with the invention, an additional, software based signal is sent to the graphics plane controller in the BDR. The BDR examines the previous and new signalling and calculates a required change in pixel aspect ratio from 15:16 to 16:9 for the graphics display, and sends a signal to the BDR display manager, which reads the new aspect ratio. Since the new ratio is much wider than the old, the display manager decides to redraw the graphics display 10, which contains mostly textual information, so the display manager chooses to reduce the width of the display rather than increase its height.

As a result, the "now and next" graphics display 12, redrawn in accordance with the invention, looks the correct shape and size for the duration of the widescreen advertisement 11 as shown in Figure 3A. If the invention was not performed the graphics display would appear short and fat (as it does with conventional broadcast data receiver solutions) and this form of graphics display 14 is illustrated in Figure 2A.

When the advertisement break is over, the next program begins. This is in 4:3 video display format. When the new programme starts in the 4:3 video display format, the same set of messages as with the previous change are generated, but in reverse, and result in the display manager reversing the previous change and restoring the graphics display to the width it held to start with. This again ensures the correct shape of the graphics display on the television display.

Referring now to Figure 1B, the new programme 17 is shown in a 16:9 letterbox video display format as the graphics plane controller has been told by the MPEG controller that line 23 signalling is being used to indicate that a letterboxed 16:9 (or wider) video display format 16 is being shown inside the 4:3 video display frame, hence the black bars 4,6 and small sized graphics display 22. The display screen goes into "zoom" mode, which means that whilst the graphics display 22 has the right proportions, it is now in the wrong place as is illustrated in Figure 2B where the graphics display 22 is partly obliterated. In accordance with the invention the graphics plane controller has already significantly increased the size of the safe area regions 18,20 at the top and bottom of the screen to take into account the black borders 4,6 in the letterboxed video display, and the display screen is effectively "hiding" these borders by performing the "zoom" function. As the graphic display manager always obeys the safe area setting it reads from the graphics plane controller, then, in addition to correcting the graphic display width, the display manager also moves the graphics display 22 upwards so as to achieve the zoom display in accordance with the invention and as shown in Figure 3B with the moved graphic display 22, wholly visible.

With the invention performed in the manner set out, the users practical experience of this is that as the television smoothly switches between normal 4:3, 16:9 anamorphic and 4:3 with 16:9 letterbox zooming for the video display, the broadcast data receiver display seamlessly switches with it, maintaining the correct aspect ratio and the visible positioning and appropriate resizing of the graphics display at all times.

As a result of this invention, users of a digital television receiver with an overlaid graphics display on top of the video display no longer have to put up with the graphics appearing to change shape or size, or in some cases being omitted, wholly or partially, from the display screen as the apparatus allows the changes between various different video display formats as the incoming video display changes format.

## Claims

1. Television apparatus comprising a source of digital video data and a display screen connected to said source, said source processing said data to generate a video display in a particular format for display on the display screen which may be of the same or a different format, said source of video data also capable of generating a graphic display on a portion of said display screen and **characterised in that** the shape, dimensions and/or position of the graphic display on the display screen is controlled by the data source with respect to the video display format and/or the display screen format.

2. Television apparatus according to claim 1 **characterised in that** the source of digital video data is any or any combination of a broadcast data receiver (BDR) or a DVD player or a VCR player.

3. Television apparatus according to claim 1 **characterised in that** the source of digital video data includes a signalling mechanism and the action taken by software in the source of digital video data which controls the graphics display is in response to the signals received from the signalling mechanism.

4. Television apparatus according to claim 1 **characterised in that** the apparatus displays a decoded video display on a PAL analogue television display screen and at some point in its operation overlays information for the user in the form of a graphics display, separate from, but usually related to, the decoded video display.

5. Television apparatus according to claim 4 **characterised in that** the graphics display is any, or any combination of a television channel number and name, information relating to a particular television programme or programmes or a time display.

6. Television apparatus according to claim 1 **characterised in that** the format of the display screen on which the decoded video display is generated supports, through the source of digital video data connected to the display screen, different video display aspect ratios and/or active areas such that the source of digital video data can control the display screen to change the way in which it presents the video dynamically.

7. Television apparatus according to claim 1 **characterised in that** the source of digital video data generates a 16:9 format video display image and is connected to a 4:3 format television display screen in which case the source of digital video data stretches the video display to the correct proportions horizontally, and removes the left/right edges of the video display that no longer fit on the display screen.

8. Television apparatus according to claim 1 **characterised in that** the source of digital video data scales the video display down vertically, adding blank bars to the top and bottom of the video display.

9. Television apparatus according to claim 1 **characterised in that** the source of digital video data is a BDR and the video data sent to the BDR is sent in a Motion Picture Expert Group 2 (MPEG 2) transport stream which contains embedded codes telling the BDR the shape, or aspect ratio format of the video display content and what the active area of that content is.

10. Television apparatus according to claim 9 **characterised in that** the BDR uses the information about the aspect ratio of the incoming video and its active area, and combines this with the information about the display screen it is attached to and any other related items as described above, and reaches a decision as to how the video display data should be decoded and the video display best shown on the display screen.

11. Television apparatus according to claim 1 **characterised in that** the source of digital video data sends signals on line 23 of the decoded video display and/or through pin 8 of a SCART connector to the display screen to inform the display screen control means the format of video display it is being sent.

12. Television apparatus according to claim 1 **characterised in that** the source of digital video data includes three software units or layers namely an MPEG data controller, a graphics plane controller and software responsible for laying out and redrawing overlay information the graphics display plane.

13. Television apparatus according to claim 12 **characterised in that** the MPEG data controller sends signals to the graphics plane controller dynamically when a change in the active area or aspect ratio of the video display is detected.

14. Television apparatus according to claim 12 **characterised in that** upon seeing the signal from the MPEG controller, the graphics plane controller for the graphics display reads the signalling state for the display screen and in conjunction with the information describing the attached display screen, adjusts the parameters for pixel shape and safe area for the graphics display.

15. Television apparatus according to claim 1 **characterised in that** the graphics display is a display portion which is overlaid onto a decoded video display shown on a display screen, both the graphic and video display generated by the source of digital video data.

16. Television apparatus according to claim 1 **characterised in that** the source of digital video data is a BDR and any alteration to the graphic display on the display screen is made via any or any combination of control of the MPEG decoder hardware, management of the resolution of the graphics display plane overlaid on top of the video display and/or the laying out and redrawing of the graphics display.

17. A signalling mechanism for a broadcast data receiver, said mechanism allowing dynamic movement and rescaling of a graphics display generated from the broadcast data receiver on a display screen, said dynamic movement and rescaling of the graphic display generated to best fit said graphics display to the said display screen said dynamic movement and rescaling of the graphics display generated with reference to the video display generated from the received data and/or the format of the display screen connected to the said broadcast data receiver and movement and rescaling of the format of the graphic display occurring during viewing of the same to take into account changes in the format of the video display and/or display screen formats.
